# EUROPEAN PATENT SPECIFICATION

(11) **EP 3 513 082 B1**
(45) Date of publication and mention of the grant of the patent: **15.04.2020**
(21) Application number: 16770228.1
(22) Date of filing: 13.09.2016
(51) Int. Cl.: F16B 23/00, F16B 37/00

(54) **WHEEL NUT**
RADMUTTER
ÉCROU DE ROUE

(43) Date of publication of application: 24.07.2019
(73) Proprietor: Volvo Truck Corporation, 405 08 Göteborg (SE)
(72) Inventor: AUGUSTSSON, Kent, 517 37 Bollebygd (SE); DAGH, Ingemar, 413 18 Göteborg (SE); ANDERSSON, Tobias, 423 38 Torslanda (SE)
(74) Representative: Kransell & Wennborg KB
(86) International application number: PCT/EP2016/071552
(87) International publication number: WO 2018/050206

(56) References cited:
- CN-U- 204 458 753
- JP-A- 2005 313 874
- US-A- 5 772 377

## Description

### TECHNICAL FIELD

The invention relates to a wheel nut for securing a wheel to a threaded stud or bolt of a vehicle. The present invention also relates to a vehicle comprising at least one such wheel nut. The invention can be applied in heavy or medium duty trucks, for example. Although the invention will be described with respect to a truck, the invention is not restricted to this particular vehicle, but may also be used in other vehicles.

### BACKGROUND

A wheel nut typically has a threaded bore adapted to mate with a threaded stud or bolt, an external hexagonal tool interface, and a rounded or conical (tapered) end.

For studs or bolts with different diameters, differently sized wheel nuts are typically required, and differently sized wheel nuts typically require different fixed wrenches.

In this context, US3960047 discloses a dual size lug nut for securing an automobile wheel to a hub. From a central head portion of the nut, threaded shanks extend in opposite direction. The two shanks have different threads. Thus the nut may be screwed onto either of two sizes of stud bolts, depending on which end of the nut is threaded onto the bolt. Hence in US3960047 the same tool, and also the same nut, can be used for two different thread sizes of stud bolts. JP 2005 313874 A discloses a wheel nut.

### SUMMARY

An object of the invention is to provide a wheel nut which in particular can be used with a tool which usually is used for wheel nuts for threaded studs or bolts with a smaller diameter.

According to a first aspect of the invention, the object is achieved by a wheel nut for securing a wheel to a threaded stud or bolt of a vehicle, wherein the wheel nut comprises: a torque receiving section with an external tool interface but without internal threading; and a load bearing section including a threaded internal bore adapted to mate with the threaded stud or bolt, a first portion adapted to contact a washer, and a second portion axially arranged between the first portion and the torque receiving section.

The present invention is based on the understanding that by having a first section including the external tool interface but no internal threading, and a second section with the internal bore, torque and load management may be separated in the nut. That is, the first section denoted 'torque receiving section' manages the torque, and the second section denoted 'load bearing section' manages the force. This in turn allows the wheel nut to be made stronger (which may be needed for larger diameter studs/bolts), while the external tool interface can be the same as for wheel nuts for threaded studs or bolts with a smaller diameter.

The material thickness T1 of the second portion of the load bearing section may for example be ≥ 0.29D, to provide sufficient strength for relevant stud/bolt sizes. Furthermore, the second portion of the load bearing section may have a material thickness as seen in a radial direction which is greater than a material thickness of the torque receiving section, in case the latter includes an internal bore.

The torque receiving section may include a non-threaded internal bore aligned with the threaded internal bore of the load bearing section. The non-threaded internal bore may have a diameter selected so that the threaded stud or bolt can extend into the non-threaded internal bore, if necessary. Instead of having a non-threaded internal bore, the torque receiving section could be completely solid (as in not hollow).

The threaded internal bore of the load bearing section may have a diameter of 24 mm. The threaded internal bore may correspond to an M24 stud or bolt.

The second portion of the load bearing section has an axial length in the range of 6-11 mm, or 8-11 mm. The axial length may for example be about 8 mm. As the axial length is increased, the strain response in the wheel nut is decreased.

The second portion of the load bearing section may have a cylindrical exterior. Hence there is no defined external tool interface on the second portion.

The first portion of the load bearing section may have an external tapered surface delimited by two circles. In this way, the contact pressure against the washer may be evenly distributed, which in turn gives an even friction force.

The external tool interface may be hexagonal. Alternatively, it could be an external torx, for example.

The wheel nut may further comprise the aforementioned washer.

According to a second aspect of the invention, there is provided a wheel nut for securing a wheel to a threaded stud or bolt of a vehicle, wherein the wheel nut comprises: a torque receiving section including an external tool interface and an internal bore adapted not to mate with the threaded stud or bolt; and a load bearing section including a threaded internal bore adapted to mate with the threaded stud or bolt, a first portion adapted to contact a washer, and a second portion axially arranged between the first portion and the torque receiving section, wherein the second portion has an cylindrical exterior. This aspect may exhibit the same or similar features and technical effects as the first aspect, and vice versa. The internal bore adapted not to mate with the threaded stud or bolt may for example have a greater diameter than the threaded internal bore of the load bearing section.

According to a third aspect of the invention, there is provided a vehicle comprising at least one wheel nut according to the first or second aspect.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples. In the drawings:
Fig. 1 is a schematic side view of a vehicle according to the present invention.
Fig. 2 is a cross-sectional side view of a wheel nut according to an embodiment of the present invention.
Fig. 3 is a perspective view of the wheel nut of fig. 2.
Fig. 4 is another perspective view of the wheel nut of fig. 2 but without the washer.
Fig. 5 is a cross-sectional side view showing the wheel nut of fig. 2 installed in the vehicle.

### DETAILED DESCRIPTION OF EXAMPLE EMBODIMENTS OF THE INVENTION

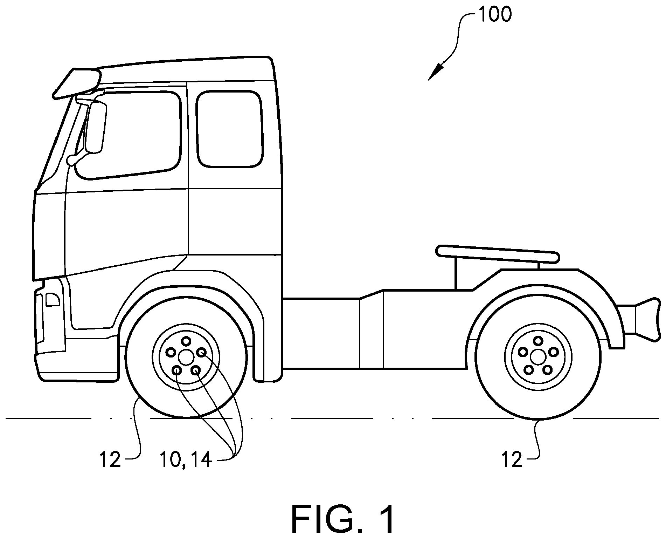

Fig. 1 is a schematic side view of a vehicle 100, namely a truck. The vehicle 100 comprises a plurality of wheels 12, typically at least four. Each wheel 12 is secured to threaded studs or bolts 14 of the vehicle 100 by means of wheel nuts 10. There may for example be ten studs/bolts 14 and wheel nuts 10 per wheel 12.

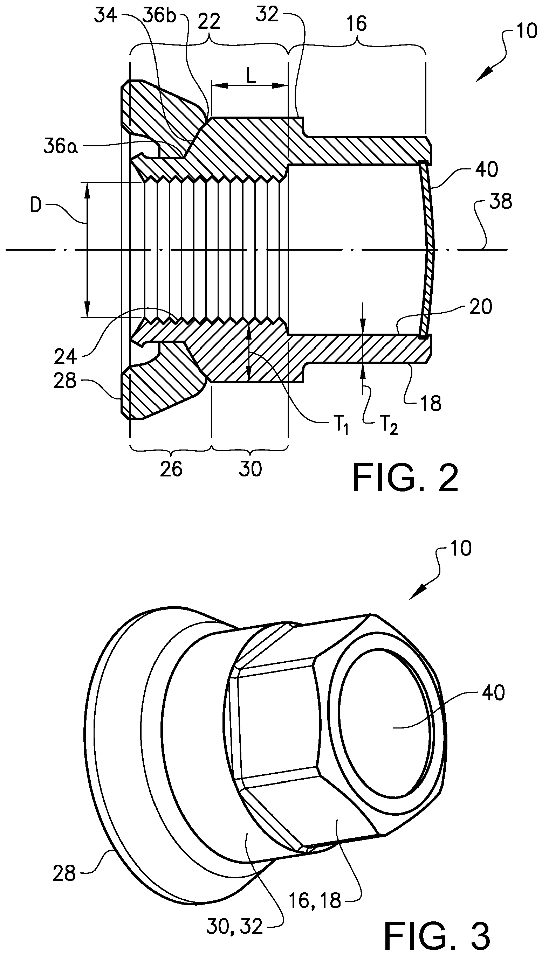

Figures 2-4 illustrate the wheel nut 10 in more detail. The wheel nut 10 generally comprises two axially consecutive sections, namely a torque receiving section 16 and a load bearing section 22. The sections 16, 22 are typically formed in one piece. The wheel nut 10 is typically made of metal or alloy, such as steel.

The torque receiving section 16, which is intended to be remote from the wheel 12 when the wheel nut 10 is in use, includes an external tool interface 18. The torque receiving section 16 is adapted to receive a torque from a tool (not shown), via the external tool interface 18. The torque is a force that intends to rotate the wheel nut 10 about the longitudinal axis 38. The external tool interface 18 is typically hexagonal, as shown in particular in fig. 3. The torque receiving section 16 further includes a non-threaded internal bore 20. Hence, there is no internal threading in the torque receiving section 16. The non-threaded internal bore 20 may be cylindrical. The threaded non-threaded internal bore 20 may extend through the entire torque receiving section 16. Hence, it is appreciated that the bore "under" the external tool interface 18 is not threaded.

The load bearing section 22, which is intended to be closest to the wheel 12 when the wheel nut 10 is in use, includes a threaded internal bore 24, a first portion 26, and a second portion 30. The load bearing section 22 is adapted to manage axial loads.

The threaded internal bore 24 may extend through (substantially) the entire load bearing section 22. The threaded internal bore 24 is adapted to mate with the threaded stud or bolt 14. The threaded internal bore 24 may have a diameter D of 24 mm, so that it can mate with a M24 stud or bolt 14. The threaded internal bore 24 and the non-threaded internal bore 20 are aligned. Together they form a through hole of the wheel nut 10, which through hole extends in the direction of the longitudinal axis 38. The wheel nut 10 may further comprise a cover 40 sealing off the end of the non-threaded internal bore 20 which is opposite the load bearing section 22. The non-threaded internal bore 20 may have a greater diameter than the threaded internal bore 24, so that if necessary the threaded stud or bolt 14 can extend into the non-threaded internal bore 20, but without the threaded stud or bolt 14 engaging the internal bore 20.

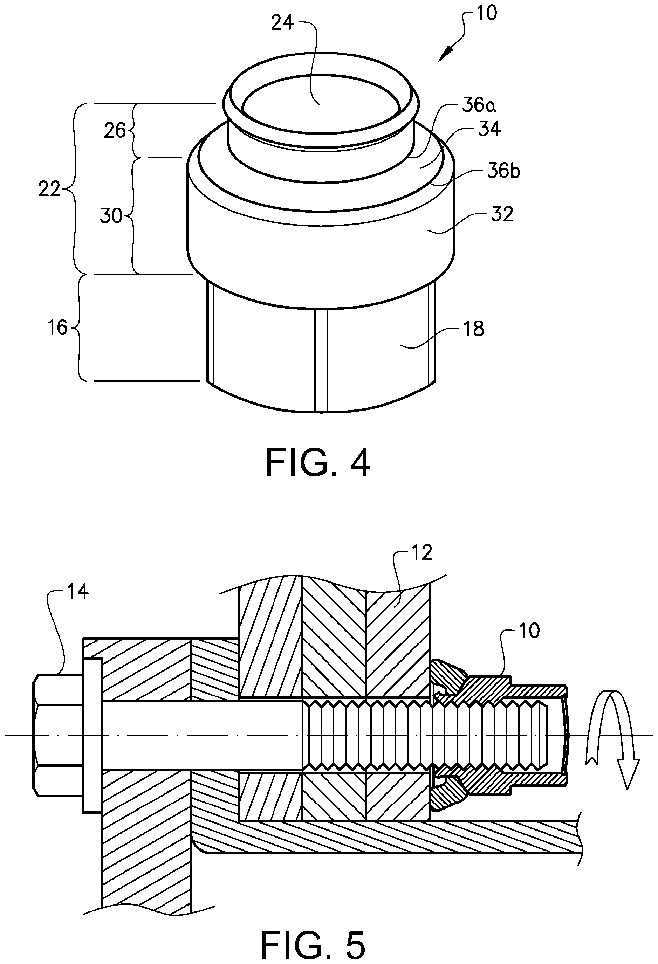

The first portion 30 of the load bearing section 22 is adapted to contact a washer 28. The washer 28 is generally used to distribute clamp load and secure correct friction between washer 28 and wheel nut 10. The first portion 30 has an external tapered surface 34 which contacts the washer 28. The external tapered surface 34 is delimited by two circles 36a-b, see in particular fig. 4. In this way, the contact pressure against the washer 28 may be evenly distributed, which in turn gives an even friction force. The first circle 36a, which is distal to the second portion 30 compared to second circle 36b, is smaller than the second circle 36b.

The second portion 30 of the load bearing section 22 is arranged between the first portion 26 (of the load bearing section 22) and the torque receiving section 16 as seen in the direction of the longitudinal axis 38. The second portion 30 may be arranged directly adjacent to the first portion 26 and the torque receiving section 16. The second portion 30 may have a material thickness T1 as seen in a radial direction which is equal to or greater than 0.29 * the diameter D of the threaded internal bore 24 (i.e. T1 ≥ 0.29D). Hence for a diameter D of 24 mm, the material thickness T1 is at least 6.96 mm. The material thickness T1 of the second portion 30 may also be greater than the corresponding (maximum) material thickness T2 of the torque receiving section 16, as illustrated in fig. 2. Furthermore, the second portion 30 may have an axial length L in the range of 6-11 mm, preferably in the range of 8-11 mm. If the axial length of the second portion 30 is too short, the wheel nut 10 may break. The second portion 30 also has a cylindrical exterior 32, without any defined external tool interface. The cylindrical exterior may carry over onto the torque receiving section 16.

In use, as further shown in fig. 5, the wheel nut 10 is screwed onto the threaded bolt 14 using an appropriate tool (not shown) engaging the external tool interface 18 of the torque receiving section 16. The tool may for example be a manual or powered socket wrench. The washer 28 is clamped between the wheel 12 and the (remaining) wheel nut 10. The threaded internal bore 24 of the load bearing section 22 mates with the threaded bolt 14, which may extend further into the non-threaded internal bore 20 of the torque receiving section 16. However, since the threaded bolt 14 does not mate or otherwise engage with the internal bore 20, torque and load management is separated in the wheel nut 10. To this end, load bearing section 22 and in particular the second portion 30 thereof can be made large enough to cope for example with an M24 bolt 14, whereas the external tool interface 18 for example can be of the same size as that on a conventional wheel nut for a M22 bolt. The conventional wheel nut without such a second portion would not be able to handle the increased bolt diameter while maintaining the size of the external tool interface.

It is to be understood that the present invention is not limited to the embodiments described above and illustrated in the drawings; rather, the skilled person will recognize that many changes and modifications may be made within the scope of the appended claims.

## Claims

1. A wheel nut (10) for securing a wheel (12) to a threaded stud or bolt (14) of a vehicle (100), **characterized in that** the wheel nut comprises:
a torque receiving section (16) with an external tool interface (18) but without internal threading; and
a load bearing section (22) including a threaded internal bore (24) adapted to mate with the threaded stud or bolt (14), the load bearing section (22) comprising a first portion (26) adapted to contact a washer (28), and a second portion (30) axially arranged between the first portion (26) and the torque receiving section (16).

2. A wheel nut according to claim 1, wherein the second portion (30) of the load bearing section (22) has a material thickness (T1) as seen in a radial direction which is equal to or greater than 0.29 * the diameter (D) of the threaded internal bore (24).

3. A wheel nut according to claim 1 or 2, wherein the second portion (30) of the load bearing section (22) has a material thickness (T1) as seen in a radial direction which is greater than a material thickness (T2) of the torque receiving section (16).

4. A wheel nut according to any preceding claim, wherein the torque receiving section (16) includes a non-threaded internal bore (20) aligned with the threaded internal bore (24) of the load bearing section.

5. A wheel nut according to any preceding claim, wherein the threaded internal bore (24) of the load bearing section (22) has a diameter (D) of 24 mm.

6. A wheel nut according to any preceding claim, wherein the second portion (30) of the load bearing section (22) has an axial length (L) in the range of 6-11 mm.

7. A wheel nut according to any preceding claim, wherein the second portion (30) of the load bearing section (22) has an axial length (L) in the range of 8-11 mm.

8. A wheel nut according to any preceding claim, wherein the second portion (30) of the load bearing section (20) has a cylindrical exterior (32).

9. A wheel nut according to any preceding claim, wherein the first portion (26) of the load bearing section (20) has an external tapered surface (34) delimited by two circles (36a-b).

10. A wheel nut according to any preceding claim, wherein the external tool interface (18) is hexagonal.

11. A wheel nut according to any preceding claim, further comprising the washer (28).

12. A wheel nut (10) for securing a wheel (12) to a threaded stud or bolt (14) of a vehicle (100), **characterized in that** the wheel nut comprises:
a torque receiving section (16) including an external tool interface (18) and an internal bore (20) adapted not to mate with the threaded stud or bolt (14); and
a load bearing section (22) including a threaded internal bore (24) adapted to mate with the threaded stud or bolt (14), the load bearing section (22) comprising a first portion (26) adapted to contact a washer (28), and a second portion (30) axially arranged between the first portion (26) and the torque receiving section (16), wherein the second portion (30) has an cylindrical exterior (32).

13. A vehicle comprising at least one wheel nut (10) according to any preceding claim.

## Patentansprüche

1. Radmutter (10) zum Befestigen eines Rads (12) an einem Gewindestift oder -bolzen (14) eines Fahrzeugs (100), **dadurch gekennzeichnet, dass** die Radmutter Folgendes umfasst:
einen Drehmoment aufnehmenden Abschnitt (16) mit einer äußeren Werkzeugschnittstelle (18), aber ohne Innengewinde; und
einen lasttragenden Abschnitt (22), der eine Gewindeinnenbohrung (24) enthält, die ausgelegt ist, um mit dem Gewindestift oder -bolzen (14) zusammenzupassen, wobei der lasttragende Abschnitt (22) einen ersten Teil (26), der ausgelegt ist, um eine Unterlegscheibe (28) zu berühren, und einen zweiten Teil (30) umfasst, der axial zwischen dem ersten Teil (26) und dem Drehmoment aufnehmenden Abschnitt (16) angeordnet ist.

2. Radmutter nach Anspruch 1, wobei der zweite Teil (30) des lasttragenden Abschnitts (22) in einer radialen Richtung betrachtet eine Materialdicke (T1) aufweist, die gleich oder größer als 0,29 * der Durchmesser (D) der Gewindeinnenbohrung (24) ist.

3. Radmutter nach Anspruch 1 oder 2, wobei der zweite Teil (30) des lasttragenden Abschnitts (22) in einer radialen Richtung betrachtet eine Materialdicke (T1) aufweist, die größer als eine Materialdicke (T2) des Drehmoment aufnehmenden Abschnitts (16) ist.

4. Radmutter nach einem der vorangehenden Ansprüche, wobei der Drehmoment aufnehmende Abschnitt (16) eine gewindelose Innenbohrung (20) enthält, die mit der Gewindeinnenbohrung (24) des lasttragenden Abschnitts ausgerichtet ist.

5. Radmutter nach einem der vorangehenden Ansprüche, wobei die Gewindeinnenbohrung (24) des lasttragenden Abschnitts (22) einen Durchmesser (D) von 24 mm aufweist.

6. Radmutter nach einem der vorangehenden Ansprüche, wobei der zweite Teil (30) des lasttragenden Abschnitts (22) eine Axiallänge (L) im Bereich von 6 bis 11 mm aufweist.

7. Radmutter nach einem der vorangehenden Ansprüche, wobei der zweite Teil (30) des lasttragenden Abschnitts (22) eine Axiallänge (L) im Bereich von 8 bis 11 mm aufweist.

8. Radmutter nach einem der vorangehenden Ansprüche, wobei der zweite Teil (30) des lasttragenden Abschnitts (22) ein zylindrisches Äußeres (32) aufweist.

9. Radmutter nach einem der vorangehenden Ansprüche, wobei der erste Teil (26) des lasttragenden Abschnitts (22) eine verjüngte Außenoberfläche (34) aufweist, die durch zwei Kreise (36a-b) begrenzt ist.

10. Radmutter nach einem der vorangehenden Ansprüche, wobei die äußere Werkzeugschnittstelle (18) hexagonal ist.

11. Radmutter nach einem der vorangehenden Ansprüche, ferner umfassend die Unterlegscheibe (28).

12. Radmutter (10) zum Befestigen eines Rads (12) an einem Gewindestift oder -bolzen (14) eines Fahrzeugs (100), **dadurch gekennzeichnet, dass** die Radmutter Folgendes umfasst:
einen Drehmoment aufnehmenden Abschnitt (16), der eine äußere Werkzeugschnittstelle (18) und eine Innenbohrung (20) enthält, die ausgelegt ist, um mit dem Gewindestift oder -bolzen (14) nicht zusammenzupassen; und
einen lasttragenden Abschnitt (22), der eine Gewindeinnenbohrung (24) enthält, die ausgelegt ist, um mit dem Gewindestift oder -bolzen (14) zusammenzupassen, wobei der lasttragende Abschnitt (22) einen ersten Teil (26), der ausgelegt ist, um eine Unterlegscheibe (28) zu berühren, und einen zweiten Teil (30) umfasst, der axial zwischen dem ersten Teil (26) und dem Drehmoment aufnehmenden Abschnitt (16) angeordnet ist, wobei der zweite Teil (30) ein zylindrisches Äußeres (32) aufweist.

13. Fahrzeug, umfassend zumindest eine Radmutter (10) nach einem der vorangehenden Ansprüche.

## Revendications

1. Écrou de roue (10) destiné à fixer une roue (12) sur un goujon ou boulon fileté (14) d'un véhicule (100), **caractérisé en ce que** l'écrou de roue comprend :
une section de réception de couple (16) avec une interface d'outil externe (18) mais sans filetage interne ; et
une section de support de charge (22) comprenant un alésage interne fileté (24) adapté pour s'accoupler avec le goujon ou boulon fileté (14), la section de support de charge (22) comprenant une première partie (26) adaptée pour venir en contact avec une rondelle (28), et une deuxième partie (30) disposée axialement entre la première partie (26) et la section de réception de couple (16).

2. Écrou de roue selon la revendication 1, dans lequel la deuxième partie (30) de la section de support de charge (22) présente une épaisseur de matériau (T1) égale ou supérieure à 0,29 * le diamètre (D) de l'alésage interne fileté (24), vue dans une direction radiale.

3. Écrou de roue selon la revendication 1 ou 2, dans lequel la deuxième partie (30) de la section de réception de couple (16) présente une épaisseur de matériau (T1) supérieure à une épaisseur de matériau (T2) de la section de support de charge (22), vue dans une direction radiale.

4. Écrou de roue selon l'une quelconque des revendications précédentes, dans lequel la section de réception de couple (16) comprend un alésage interne non fileté (20) aligné avec l'alésage interne fileté (24) de la section de support de charge.

5. Écrou de roue selon l'une quelconque des revendications précédentes, dans lequel l'alésage interne fileté (24) de la section de support de charge (22) présente un diamètre (D) de 24 mm.

6. Écrou de roue selon l'une quelconque des revendications précédentes, dans lequel la deuxième partie (30) de la section de support de charge (22) présente une longueur axiale (L) dans la plage de 6 à 11 mm.

7. Écrou de roue selon l'une quelconque des revendications précédentes, dans lequel la deuxième partie (30) de la section de support de charge (22) présente une longueur axiale (L) dans la plage de 8 à 11 mm.

8. Écrou de roue selon l'une quelconque des revendications précédentes, dans lequel la deuxième partie (30) de la section de support de charge (22) présente un extérieur cylindrique (32).

9. Écrou de roue selon l'une quelconque des revendications précédentes, dans lequel la première partie (26) de la section de support de charge (22) présente une surface effilée externe (34) délimitée par deux cercles (36a-b) .

10. Écrou de roue selon l'une quelconque des revendications précédentes, dans lequel l'interface d'outil externe (18) est hexagonale.

11. Écrou de roue selon l'une quelconque des revendications précédentes, comprenant en outre la rondelle (28).

12. Écrou de roue (10) destiné à fixer une roue (12) sur un goujon ou boulon fileté (14) d'un véhicule (100), **caractérisé en ce que** l'écrou de roue comprend :
une section de réception de couple (16) comprenant une interface d'outil externe (18) et un alésage interne (20) adapté pour ne pas s'accoupler avec le goujon ou boulon fileté (14) ; et
une section de support de charge (22) comprenant un alésage interne fileté (24) adapté pour s'accoupler avec le goujon ou boulon fileté (14), la section de support de charge (22) comprenant une première partie (26) adaptée pour venir en contact avec une rondelle (28), et une deuxième partie (30) disposée axialement entre la première partie (26) et la section de réception de couple (16), la deuxième partie (30) présentant un extérieur cylindrique (32).

13. Véhicule comprenant au moins un écrou de roue (10) selon l'une quelconque des revendications précédentes.
